# EUROPEAN PATENT SPECIFICATION

(11) **EP 3 441 411 B1**
(45) Date of publication and mention of the grant of the patent: **09.02.2022**
(21) Application number: 18187479.3
(22) Date of filing: 06.08.2018
(51) Int. Cl.: C08G 18/79, C09D 175/02, C08G 18/32

(54) **POLYURETHANE SYSTEM AND ITS USE IN PRINTING TECHNOLOGY**
POLYURETHANSYSTEM UND DESSEN VERWENDUNG IN DER DRUCKTECHNIK
SYSTÈME DE POLYURÉTHANE ET SON UTILISATION DANS LA TECHNOLOGIE D'IMPRESSION

(30) Priority: 07.08.2017 EP 17185174
(43) Date of publication of application: 13.02.2019
(73) Proprietor: RAMPF Polymer Solutions GmbH & Co. KG, 72661 Grafenberg (DE)
(72) Inventor: PROGNER, Daniela, 73230 Kirchheim unter Teck (DE); RETIG, Stefan, 72585 Riederich (DE); GEIGER, Gunnar, 72144 Dußlingen (DE)
(74) Representative: Weickmann & Weickmann PartmbB

(56) References cited:
- EP-A1- 0 897 401
- EP-A1- 3 128 367
- US-A- 4 748 192

## Description

The present invention is directed to the use of a polyurethane system for the preparation of a polyurethane resin, comprising at least one aliphatic polyisocyanate and at least one aromatic diamine as a substrate in printing technology.

US 4,748,182 A covers an aliphatic polyurethane polymer and its process. The process comprises reacting, such as by spraying onto a substrate or an open mold, a caprolactone polyol with an aliphatic isocyanate in the presence of a catalytic amount of a metallo catalyst, and also in the presence of a fastcuring amount of a curing agent comprising an amine, particularly a triethanol amine, to provide a fast-reaction aliphatic urethane polymer which is a clear, easily color-pigmented polymer.

EP 0 897 401 A1 is directed to a polyurethane composition comprising: a) an isocyanate-terminated polyurethane prepolymer; and b) a curative agent comprising i) a polyol; ii) an aromatic diamine; iii) a thixotropic aliphatic amine; and iv) a thixotropic colloidal additive.

EP 3 128 367 discloses a photosensitive resin composition that enables production of lithographic printing plates. The photosensitive resin composition contains an urea group in the main chain and an infrared absorbing material.

Intaglio is the family of printing and printmaking techniques, wherein the image is incised into a surface and the incised line or sunken area holds the ink. The surface is usually made from metals, such as copper or zinc. The incisions are created by etching, engraving, dry point, aquatint or mezzotint.

Rotogravure is a type of intaglio printing process, which involves engraving the image onto a gravure cylinder as image carrier. The cylinder usually has an iron or steel core, which is covered by a layer of copper that is about 2 mm thick. An additional layer of copper capable of being engraved is applied to this so-called inner copper layer via a galvanization process. The outer layer of copper has a thickness of about 100 microns. There is a plurality of options for engraving the cylinders. Nowadays, the gravure cylinders are mostly engraved directly, e.g. via a laser beam or modern etching processes.

A considerable disadvantage of this procedure is, on the one hand, the complicated production of the gravure cylinders, which necessarily requires a galvanization step. This wet chemical process represents a considerable health risk for the people involved in the process, but also results in solutions containing heavy metal that have to be disposed of as special waste. On the other hand, the so prepared cylinders tend to deform under mechanical stress. In the latter case, the printing quality is reduced and in more severe cases, the gravure cylinder has to be renewed.

In the past years, it was suggested to coat gravure cylinders having an inner metal core with a polymeric resin. The coating process is relatively simple. In a so-called ribbon flow process, the resin mixture is homogeneously applied to the rotating cylinder in a thin jet and then cured. The polymeric resin may easily be engraved by known methods. After use, the imprinted layer may be milled off and the thus generated smooth surface may be reused for imprinting. Exemplary polymeric resins that may be used as a substrate in such printing processes may be polyurethanes usually made from isocyanate-containing prepolymers and chain extenders.

However, the polymer resins of the prior art do not exhibit the required characteristics materials should exhibit when used in such printing processes, particularly in view of mechanical stability, abrasion resistance, and elasticity, but also chemical inertness (versus ink compositions). Only polymeric resins that fulfill the above requirements provide for reproducible high-quality printing results over a long operating life.

Surprisingly, a polyurethane system was found that shows an ideal balance of the characteristics described above.

Thus, in one aspect, the present invention relates to a use of a polyurethane system for the preparation of a polyurethane resin, comprising
(i) at least one aliphatic polyisocyanate (IC), wherein the polyisocyanate (IC) has an NCO content of 11-27%, and
(ii) at least one aromatic diamine (DA), particularly phenylene diamine, optionally one or more times substituted by at least one of C₁₋₆-alkyl and C₁₋₆-alkylthio, and/or methylenebis(aniline), optionally one or more times substituted by at least one of C₁₋₆-alkyl and halogen,
as a substrate in printing technology, particularly as a substrate that is in contact with printing ink, particularly as a coating, e.g. on gravure cylinders.

The aliphatic polyisocyanate (IC) preferably comprises an isocyanurate group, a biuret group, a urethane group, an allophanate group, an iminooxadiazine group, a carbodiimide group, an uretdione group or mixtures thereof. In a more preferred embodiment, the aliphatic polyisocyanate (IC) comprises an isocyanurate and/or a biuret group. Even more preferably, the aliphatic polyisocyanate (IC) comprises an isocyanurate group.

The aliphatic polyisocyanate (IC) preferably has an NCO content of 17-27%, even more preferably 18-25%. It turned out that such high NCO contents result in polyurethanes that are ideally suitable for printing applications, particularly in view of swelling and abrasion resistance. For this reason, it is preferred that the polyurethane system is free of any isocyanate-containing prepolymer, since said prepolymers cannot reach such high NCO contents.

In another embodiment, the polyurethane system is particularly free of any prepolymer.

In a preferred embodiment, the aliphatic polyisocyanate (IC) is based on hexamethylene diisocyanate (HDI) or isophorone diisocyanate (IPDI). Particularly, the aliphatic polyisocyanate (IC) according to component (i) is based on HDI.

In a very preferred embodiment, the aliphatic polyisocyanate (IC) according to component (i) is an HDI trimerisate having the following formula:

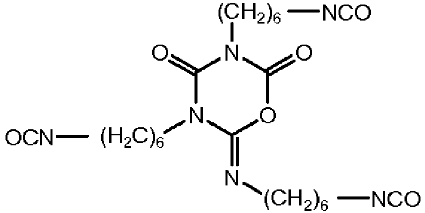

According to the invention, the polyurethane system comprises at least one aromatic diamine (DA). The aromatic diamine (DA) may be phenylene diamine, optionally one or more times substituted by at least one of C₁₋₆-alkyl and C₁₋₆-alkylthio.

"*Alkyl*" as used herein refers to a saturated hydrocarbon residue having the indicated number of carbon atoms. The alkyl group may be linear or branched.

*"Alkylthio"* as used herein refers to a group of the formula -S-alkyl, wherein the meaning of alkyl is as described above.

In a preferred embodiment, the phenylene diamine is a toluene diamine, which is two or three times substituted by at least one of C₁₋₆-alkyl and C₁₋₆-alkylthio. Particularly, the phenylene diamine is di(C₁₋₆-alkylthio)toluene diamine, such as dimethylthiotoluene diamine or di(C₁₋₆-alkyl)toluene diamine, such as diethyltoluene diamine, preferably 3,5-diethyltoluene-2,4-diamine or 3,5-diethyltoluene-2,6-diamine.

In another aspect, the aromatic diamine (DA) may be methylenebis(aniline), which is optionally one or more times substituted by at least one of C₁₋₆-alkyl and halogen.

As used herein, the term *"halogen"* refers to a fluoro, chloro, bromo or iodo group, particularly a chloro group.

In preferred embodiments, the methylenebis(aniline) is 4,4'-methylenebis(aniline), methylenebis(2,6-diisopropylaniline), methylenebis(2-methyl-6-isopropylaniline), methylenebis(2-isopropyl-6-methylaniline), such as 4,4'-methylenebis(2-isopropyl-6-methylaniline), methylenebis(3-isopropyl-2,6-diethylaniline), such as 4,4'-methylenebis(3-isopropyl-2,6-diethylaniline), methylenebis(6-methylaniline), particularly 4,4'-methylenebis(6-methylaniline), and/or methylenebis(3-chloro-2,6-diethylaniline).

Component (ii) may be a mixture comprising phenylene diamine, which is optionally one or more times substituted by at least one of C₁₋₆-alkyl and C₁₋₆-alkylthio, and methylenebis(aniline), optionally one or more times substituted by at least one of C₁₋₆-alkyl and halogen. The preferred compounds of phenylene diamine and methylenebis(anliline) in the mixture are the same as defined above.

In another embodiment, component (ii) may be a mixture comprising toluene diamine substituted by one or two C₁₋₆-alkylthio groups, such as dimethylthiotoluene diamine, and toluene diamine substituted by one or two C₁₋₆-alkyl groups, such as diethyltoluene diamine.

In a preferred aspect, the present invention relates to a use of a polyurethane system for the preparation of a polyurethane resin, comprising
(i) at least one aliphatic polyisocyanate (IC) and
(ii) a mixture comprising toluene diamine substituted by one or two C₁₋₆-alkylthio groups, such as dimethylthiotoluene diamine, and toluene diamine substituted by one or two C₁₋₆-alkyl groups, such as diethyltoluene diamine
as a substrate in printing technology, particularly as a substrate that is in contact with printing ink, particularly as a coating, e.g. on gravure cylinders.

In the above mixtures, the weight ratio of the toluene diamine substituted by one or two C₁₋₆-alkylthio groups and the toluene diamine substituted by one or two C₁₋₆-alkyl groups preferably is 5:95 to 95:5, more preferably 70:30 to 30:70, even more preferably 50:50.

In a preferred embodiment, component (ii) comprises at least 90 wt.-%, more preferably at least 95 wt.-% dimethylthiotoluene diamine and/or diethyltoluene diamine.

The polyurethane system may further comprise at least one excipient. The term "*excipient*" as used herein refers to additional components, which provide for certain characteristics of the polyurethane resin, for example the excipient may provide for improved electrical conductivity, thixotropy, mechanical parameters, such as stiffness, and catalyzing the conversion between components (i) and (ii). In a preferred embodiment, such excipient may be an agent that provides for electrical conductivity. Such agents are known to the skilled person and include, for example, carbon-containing agents, such as carbon black, modified carbon black, carbon nanotubes, and/or quaternary ammonium compounds. Excipients that provide for improved thixotropy of components (i), (ii) and/or mixtures thereof may be aliphatic amines and/or polyamines, such as polyethyleneimine.

In a preferred embodiment, the polyurethane system is free of any polyalkanolamine.

Other excipients may be organic or inorganic fillers, such as silica, minerals or microspheres.

The polyurethane system is preferably configured such that the molar ratio of the NCO groups in component (i) to NCO reactive hydrogen in component (ii) is 0.9 to 1.1, preferably 0.95 to 1.08, more preferably 1.00 to 1.06.

NCO reactive hydrogen particularly relates to any -NH₂ and -OH group, but not to -NH-, -COOH or other H-containing groups. NCO reactive hydrogen particularly relates to any -NH₂ and -OH groups.

The polyurethane system is preferably configured such that the molar ratio of NCO-groups in component (i) to amine groups deriving from the at least one aromatic diamine (DA) in component (ii) is 20:1 to 1:1.1, preferably 10:1 to 1:1.1, more preferably 2:1 to 1:1.1, most preferably 1.1:1 to 1:1.1.

Surprisingly, it was found that the polyurethane resins have a swelling behavior of at most 20%, preferably at most 5%, more preferably at most 2%, or 0.001-20%, after 24 hours of storage in ethyl acetate at 22 °C. The skilled person will be aware that inks for rotogravure printing usually contain solvents, particularly organic solvents such as ethyl acetate and acetone. One of the most significant drawbacks of polymer resins of the prior art is their swelling behavior in the presence of organic solvents. Thus, when using the polyurethane resins in printing processes, it has to be assured that the dimension stability of the material is given under the respective printing conditions, i.e. under mechanical stress as well as under the chemical conditions predefined by the respective inks used.

For this reason, the polyurethane resins can be used as a substrate in printing technology, particularly as a substrate that can be used in direct contact with the printing ink. In a more preferred embodiment, the polyurethane resins can act as a coating, e.g. on gravure cylinders, in rotogravure printing technology.

It has been shown that the coating is especially suitable to be engraved by methods known to the skilled person e.g. by edging, laser ablation, mechanical ablation, etc.

The polyurethane resin may have a shore D hardness of 50-90, preferably 60-90, measured according to DIN EN ISO 868. The shore hardness is balanced such that the polyurethane resin provides sufficient hardness to withstand the mechanical load in the printing industry, e.g. as a cylinder coating in a rotogravure process, but also provides sufficient elasticity, which prevents a permanent deformation and results in long-lasting high printing quality.

The polyurethane resin can further be characterized by a minimum abrasion, particularly by an abrasion of 10-400 mm³, preferably 20-300 mm³, measured according to DIN ISO 4946. The abrasion characteristics of the polyurethane resin assure that the printed pattern can be used with sufficient quality for a long-running term.

The density of the polyurethane resin particularly is in the range of 1.05-1.25 g/cm³.

The polyurethane resin may have an elongation of 2-30 %, preferably 4-20 %, measured according to DIN ISO 527.

The polyurethane resin may have a surface resistance of 0.05-1.0 MΩ or 0.1-0.3 MΩ, measured according to IEC 62631-3-2. Such characteristics assure a sufficient discharge capability, particularly required when the polyurethane resin is used as a substrate in printing processes.

In the following, the invention is more specifically shown by examples.

### Examples

### Materials

ETHACURE^{®} 100 is 3,5-diethyltoluene-diamine having an equivalent weight of 89.1. It can be purchased from Albemarle Corporation.

ETHACURE^{®} 300 is dimethylthiotoluene diamine having an equivalent weight of 107. It can be purchased from Albemarle Corporation.

Desmodur^{®} N 3200 is an HDI trimerisate having an NCO content of 23.0 ± 0.5% (measured by M105-ISO 11909). Its viscosity at 23 °C is 2500 ± 1000 mPa·s (measured according to M014-ISO 3219/A.3).

IMUTHANE^{®} PET-70D is an NCO prepolymer made from toluene diisocyanate (TDI) and polytetramethyleneglycol having an NCO content of 8.7%. Its viscosity is about 2,000-2,200 cps at 40 °C. It can be purchased from Coim USA Inc.

### Preparation of the polyurethane resin

The mixture of component (i) as indicated in Table 1 was homogenized and degassed. Component (ii) was degassed and added to component (i) using the amounts indicated in Table 1. The mixture of components (i) and (ii) was homogenized in a speedmixer (Vortex) for 20 seconds at a power of 100%. The mixture was poured into an aluminum mold for preparing test samples having a thickness of 2 or 4 mm. After initiation of the reaction, the test samples were tempered for at least 16 hours at 110 °C. After cooling to 25 °C, the test samples were demolded.

**Table 1: Formulation of the polyurethane resin**

| | Comparative example | Example 1 |
|---|---|---|
| **Component (ii)** | | |
| ETHACURE^{®} 100 [parts by weight] | 10 | 10 |
| ETHACURE^{®} 300 [parts by weight] | 90 | 90 |

| **Component (i)** | | |
|---|---|---|
| Desmodur^{®} N 3200 [parts by weight] | | 176 |
| IMUTHANE^{®} PET-70D [parts by weight] | 465 | |
| **Index** [%] | 100.9 | 101 |

The obtained samples were subsequently post-cured at 110 °C for 24 h and maintained at 22 °C for 12 h. The test results are listed in Table 2, also indicating the respective test methods.

**Table 2: Test results**

| **Characteristic** | **Test method** | **unit** | **Example 1** | **Comparative example** |
|---|---|---|---|---|
| mixinq ratio | - | pbw | 100 : 176 | 100 :465 |
| component (ii) : component (i) | | | | |
| pot-life | RPV 21 | mm:ss | 05:00 | 07:00 |
| shore hardness | RPV 16 | D | 85 | 70 |
| density | RPV 25 | g/cm³ | 1.19 | 1.16 |
| tensile strength | DIN EN ISO 527 | MPa | 72 | 40 |
| elongation | | % | 6-12 | 250 |
| E-modulus | | MPa | 1900 | 360 |
| flexural strength | DIN EN ISO 178 | MPa | 134 | 24 |
| abrasion | DIN ISO 4946 | mm³ | 220 | 50 |
| swelling | | | | |
| 100% ethylacetate | | | | |
| 0.5 h | | % / Delta Shore D | 0/0 | 2,0/-6 |
| 24 h | | | 0/0 | 19/-33 |
| 25% ethylacetate / 75% isopropylalcohol | | | | |
| 0.5 h | | % / Delta Shore D | 0/0 | 0.9/-4 |
| 24 h | | | 0/0 | 7.5/-18 |

The polyurethane shows excellent swelling behavior in the presence of organic solvents such as ethylacetate and/or isopropanol, while having good mechanical characteristics. The polyurethanes are thus ideally suitable for use in printing technology, particularly when in contact with organic solvent containing inks.

## Claims

1. Use of a polyurethane system for the preparation of a polyurethane resin, comprising
(i) at least one aliphatic polyisocyanate (IC), wherein the polyisocyanate (IC) has an NCO content of 11-27%, and
(ii) at least one aromatic diamine (DA), particularly phenylene diamine, optionally one or more times substituted by at least one of C₁₋₆-alkyl and C₁₋₆-alkylthio, and/or methylenebis(aniline), optionally one or more times substituted by at least one of C₁₋₆-alkyl and halogen,
as a substrate in printing technology, particularly as a substrate that is in contact with printing ink, particularly as a coating, e.g. on gravure cylinders.

2. Use of a polyurethane system according to claim 1, wherein the polyisocyanate (IC) comprises an isocyanurate group, a biuret group, a urethane group, an allophanate group, an iminooxadiazine group, a carbodiimide group, a uretdione group or mixtures thereof, particularly an isocyanurate and/or a biuret group.

3. Use of a polyurethane system according to claim 1 or 2, wherein the polyisocyanate (IC) has an NCO content of 17-27%, more preferably 18-25%.

4. Use of a polyurethane system according to any of the preceding claims, wherein the polyisocyanate (IC) is based on hexamethylene diisocyanate (HDI) or isophorone diisocyanate (IPDI), particularly HDI, such as HDI-trimerisate.

5. Use of a polyurethane system according to any of the preceding claims, wherein the polyurethane system is free of any isocyanate prepolymer, particularly free of any prepolymer.

6. Use of a polyurethane system according to any of the preceding claims, wherein the phenylene diamine is toluene diamine, two or three times substituted by at least one of C₁₋₆-alkyl and C₁₋₆-alkylthio, such as di(C₁₋₆-alkylthio)toluene diamine or di(C₁₋₆-alkyl)toluene diamine, preferably dimethylthiotoluene diamine or diethyltoluene diamine, such as 3,5-diethyltoluene-2,4-diamine and/or 3,5-diethyltoluene-2,6-diamine.

7. Use of a polyurethane system according to any of the preceding claims, wherein the methylenebis(aniline) is 4,4'-methylenebis(aniline), methylenebis(2,6-diisopropylaniline), methylenebis(2-methyl-6-isopropylaniline), methylenebis(2-isopropyl-6-methylaniline), such as 4,4'-methylenebis(2-isopropyl-6-methylaniline), methylenebis(3-isopropyl-2,6-diethylaniline), such as 4,4'-methylenebis(3-isopropyl-2,6-diethylaniline), methylenebis(6-methylaniline), particularly 4,4'-methylenebis(6-methylaniline), and/or methylenebis(3-chloro-2,6-diethylaniline).

8. Use of a polyurethane system according to any of the preceding claims, wherein component (ii) is a mixture comprising toluene diamine substituted by one or two C₁₋₆-alkylthio groups and toluene diamine substituted by one or two C₁₋₆-alkyl groups, particularly in a weight ratio of 5:95 to 95:5, preferably 70:30 to 30:70, more preferably 50:50.

9. Use of a polyurethane system according to any of the preceding claims, further comprising at least one excipient, such as an agent that provides for electrical conductivity, preferably carbon-containing agents such as carbon black, carbon nanotubes, and/or quarternary ammonium compounds and a thixotroping agent, preferably an aliphatic amine and/or polyamine, such as polyethyleneimine.

10. Use of a polyurethane system according to any of the preceding claims, wherein the molar ratio of NCO groups in component (i) to NCO reactive hydrogen, such as -NH₂ and -OH, in component (ii) is 0.9-1.1.

11. Use of a Polyurethane system according to any of the preceding claims, wherein the molar ratio of NCO-groups in component (i) to amine groups deriving from the at least one aromatic diamine (DA) in component (ii) is 20:1 to 1:1.1, preferably 10:1 to 1:1.1, more preferably 2:1 to 1:1.1, most preferably 1.1:1:1 to 1:1.1.

## Patentansprüche

1. Verwendung eines Polyurethan-Systems zur Herstellung eines Polyurethan-Harzes, umfassend
(i) wenigstens ein aliphatisches Polyisocyanat (IC), wobei das Polyisocyanat (IC) einen NCO-Gehalt von 11-27 % aufweist, und
(ii) wenigstens ein aromatisches Diamin (DA), insbesondere Phenylendiamin, gegebenenfalls ein- oder mehrmals substituiert mit wenigstens einem von C₁₋₆-Alkyl und C₁₋₆-Alkylthio, und/oder Methylenbis(anilin), gegebenenfalls ein- oder mehrmals substituiert mit wenigstens einem von C₁₋₆-Alkyl und Halogen,
als ein Substrat in Drucktechnologie, insbesondere als ein Substrat, welches mit Drucktinte in Kontakt steht, insbesondere als eine Beschichtung, z.B. auf Gravur-Zylindern.

2. Verwendung eines Polyurethan-Systems nach Anspruch 1, wobei das Polyisocyanat (IC) eine Isocyanurat-Gruppe, eine Biuret-Gruppe, eine Urethan-Gruppe, eine Allophanat-Gruppe, eine Iminooxadiazin-Gruppe, eine Carbodiimid-Gruppe, eine Uretdion-Gruppe oder Mischungen davon umfasst, insbesondere eine Isocyanurat-Gruppe und/oder eine Biruet-Gruppe.

3. Verwendung eines Polyurethan-Systems nach Anspruch 1 oder 2, wobei das Polyisocyanat (IC) einen NCO-Gehalt von 17-27 % aufweist, stärker bevorzugt 18-25 %.

4. Verwendung eines Polyurethan-Systems nach einem der vorhergehenden Ansprüche, wobei das Polyisocyanat (IC) auf Hexamethylendiisocyanat (HDI) oder Isophorondiisocyanat (IPDI) basiert, insbesondere HDI, wie beispielsweise HDI-Trimerisat.

5. Verwendung eines Polyurethan-Systems nach einem der vorhergehenden Ansprüche, wobei das Polyurethan-System frei von jeglichem Isocyanat-Präpolymer ist, insbesondere frei von jeglichem Präpolymer.

6. Verwendung des Polyurethan-Systems nach einem der vorhergehenden Ansprüche, wobei das Phenylendiamin Toluoldiamin ist, zwei- oder dreimal substituiert mit wenigstens einem von C₁₋₆-Alkyl und C₁₋₆-Alkylthio, wie beispielsweise Di(C₁₋₆-alkylthio)toluoldiamin, oder Di(C₁₋₆-alkyl)toluoldiamin, bevorzugt Dimethylthiotoluoldiamin oder Diethyltoluoldiamin, wie beispielsweise 3,5-Diethyltoluol-2,4-Diamin und/oder 3,5-Diethyltoluol-2,6-Diamin.

7. Verwendung eines Polyurethan-Systems nach einem der vorhergehenden Ansprüche, wobei das Methylenbis(anilin) 4,4'-Methylenbis(anilin), Methylenbis(2,6-diisopropylanilin), Methylenbis(2-methyl-6-isopropylanilin), Methylenbis(2-isopropyl-6-methylaniline), wie beispielsweise 4,4'-Methylenbis(2-isorpopyl-6-methylanilin), Methylenbis(3-isopropyl-2,6-diethylanilin), wie beispielsweise 4,4'-Methylenbis(3-isopropyl-2,6-diethylanilin), Methylenbis(6-Methylanilin), insbesondere 4,4'-Methylenbis(6-methylanilin), und/oder Methylenbis(3-chloro-2,6-diethylanilin) ist.

8. Verwendung eines Polyurethansystems nach einem der vorhergehenden Ansprüche, wobei Komponente (ii) eine Mischung ist, welche Toluoldiamin, substituiert mit einer oder zwei C₁₋₆-Alkylthio-Gruppen, und Toluoldiamin, substituiert mit einer oder zwei C₁₋₆-AlkylGruppen, umfasst, insbesondere in einem Gewichtsverhältnis von 5:95 bis 95:5, bevorzugt 70:30 bis 30:70, stärker bevorzugt 50:50.

9. Verwendung eines Polyurethan-Systems nach einem der vorhergehenden Ansprüche, ferner umfassend wenigstens einen Hilfsstoff, wie beispielsweise ein Mittel, das elektrische Leitfähigkeit bereitstellt, bevorzugt kohlenstoffhaltige Mittel, wie Ruß, Kohlenstoffnanoröhrchen und/oder quaternäre Ammoniumverbindung und ein thixotropes Mittel, bevorzugt ein aliphatisches Amin und/oder Polyamin, wie beispielsweise Polyethylenimin.

10. Verwendung eines Polyurethan-Systems nach einem der vorhergehenden Ansprüche, wobei das molare Verhältnis von NCO-Gruppen in Komponente (i) zu NCO reaktivem Wasserstoff, wie beispielsweise als -NH₂ und -OH, in Komponente (ii) 0,9-1,1 beträgt.

11. Verwendung eines Polyurethan-Systems nach einem der vorhergehenden Ansprüche, wobei das molare Verhältnis von NCO-Gruppen in Komponente (i) zu AminGruppen, die von dem wenigstens einen aromatischen Diamin (DA) stammen, in Komponente (ii) 20:1 bis 1:1,1, bevorzugt 10:1 bis 1:1,1, stärker bevorzugt 2:1 bis 1:1,1, am stärksten bevorzugt 1,1:1:1 bis 1:1,1 beträgt.

## Revendications

1. Utilisation d'un système de polyuréthane pour la préparation d'une résine polyuréthane, comprenant
(i) au moins un polyisocyanate (IC) aliphatique, dans laquelle le polyisocyanate (IC) possède une teneur en NCO de 11 à 27 %, et
(ii) au moins une diamine aromatique (DA), en particulier une phénylène diamine, facultativement une ou plusieurs fois substituée par au moins l'un parmi un alkyle en C₁₋₆ et un alkylthio en C₁₋₆, et/ou une méthylènebis(aniline), facultativement une ou plusieurs fois substituée par au moins l'un parmi un alkyle en C₁₋₆ et un halogène,
en tant que substrat en technologie d'impression, en particulier en tant que substrat qui est en contact avec une encre d'impression, en particulier en tant que revêtement, par ex. sur des cylindres de gravure.

2. Utilisation d'un système de polyuréthane selon la revendication 1, dans laquelle le polyisocyanate (IC) comprend un groupe isocyanurate, un groupe biuret, un groupe uréthane, un groupe allophanate, un groupe iminooxadiazine, un groupe carbodiimide, un groupe uretdione ou leurs mélanges, en particulier un isocyanurate et/ou un groupe biuret.

3. Utilisation d'un système de polyuréthane selon la revendication 1 ou 2, dans laquelle le polyisocyanate (IC) possède une teneur en NCO de 17 à 27 %, plus préférentiellement de 18 à 25 %.

4. Utilisation d'un système de polyuréthane selon l'une quelconque des revendications précédentes, dans lequel le polyisocyanate (IC) est à base de diisocyanate d'hexaméthylène (HDI) ou de diisocyanate d'isophorone (IPDI), en particulier d'HDI, tel que le trimérisate d'HDI.

5. Utilisation d'un système de polyuréthane selon l'une quelconque des revendications précédentes, dans lequel le système de polyuréthane est exempt d'un quelconque prépolymère d'isocyanate, en particulier exempt d'un quelconque prépolymère.

6. Utilisation d'un système de polyuréthane selon l'une quelconque des revendications précédentes, dans lequel la phénylène diamine est un toluène diamine, deux ou trois fois substituée par au moins l'un parmi un alkyle en C₁₋₆ et un alkylthio en C₁₋₆, telles qu'une di(alkylthio en C₁₋₆)toluène diamine ou une di(alkyl en C₁₋₆)toluène diamine, de préférence une diméthylthiotoluène diamine ou une diéthyltoluène diamine, telles que la 3,5-diéthyltoluène-2,4-diamine et/ou la 3,5-diéthyltoluène-2,6-diamine.

7. Utilisation d'un système de polyuréthane selon l'une quelconque des revendications précédentes, dans lequel la méthylènebis(aniline) est la 4,4'-méthylènebis(aniline), une méthylènebis(2,6-diisopropylaniline), une méthylènebis(2-méthyl-6-isopropylaniline), une méthylènebis(2-isopropyl-6-méthylaniline), telle que la 4,4'-méthylènebis(2-isopropyl-6-méthylaniline), une méthylènebis(3-isopropyl-2,6-diéthylaniline), telle que la 4,4'-méthylènebis(3-isopropyl-2,6-diéthylaniline), une méthylènebis(6-méthylaniline), en particulier la 4,4'-méthylènebis(6-méthylaniline) et/ou une méthylènebis(3-chloro-2,6-diéthylaniline).

8. Utilisation d'un système de polyuréthane selon l'une quelconque des revendications précédentes, dans lequel le constituant (ii) est un mélange comprenant un toluène diamine substituée par un ou deux groupes alkylthio en C₁₋₆ et un toluène diamine substituée par un ou deux groupes alkyle en C₁₋₆, en particulier dans un rapport de poids de 5:95 à 95:5, de préférence de 70:30 à 30:70, plus préférentiellement de 50:50.

9. Utilisation d'un système de polyuréthane selon l'une quelconque des revendications précédentes, comprenant en outre au moins un excipient, tel qu'un agent qui confère une conductivité électrique, de préférence des agents contenant du carbone tels que le noir de carbone, les nanotubes de carbone, et/ou des composés d'ammonium quaternaire et un agent thixotrope, de préférence une amine et/ou polyamine aliphatique, telle qu'une polyéthylèneimine.

10. Utilisation d'un système de polyuréthane selon l'une quelconque des revendications précédentes, dans lequel le rapport molaire de groupes NCO dans le constituant (i) sur l'hydrogène réactif à NCO, tel que -NH₂ et -OH, dans le constituant (ii) est de 0,9 à 1,1.

11. Utilisation d'un système de polyuréthane selon l'une quelconque des revendications précédentes, dans lequel le rapport molaire de groupes NCO dans le constituant (i) sur des groupes amine dérivant de l'au moins une diamine aromatique (DA) dans le constituant (ii) est de 20:1 à 1:1,1, de préférence de 10:1 à 1:1,1, plus préférentiellement de 2:1 à 1:1,1, de manière préférée entre toutes de 1,1:1:1 à 1:1,1.
